Europäisches Patentamt

European Patent Office

Office européen des brevets

(19)

(11) Veröffentlichungsnummer: **0 164 497**
**B1**

(12) **EUROPÄISCHE PATENTSCHRIFT**

(45) Veröffentlichungstag der Patentschrift: **05.09.90**

(21) Anmeldenummer: **85102152.7**

(22) Anmeldetag: **27.02.85**

(51) Int. Cl.⁵: **E 04 B 1/66,** E 04 D 5/14

(54) Verschweissbare Abdichtungsbahn.

(30) Priorität: **14.06.84 DE 3422018**

(43) Veröffentlichungstag der Anmeldung:
**18.12.85 Patentblatt 85/51**

(45) Bekanntmachung des Hinweises auf die
Patenterteilung:
**05.09.90 Patentblatt 90/36**

(84) Benannte Vertragsstaaten:
**AT BE CH DE FR GB IT LI NL SE**

(56) Entgegenhaltungen:
**DE-A-2 358 102**
**FR-A-2 215 511**
**FR-A-2 393 993**

(73) Patentinhaber: **Niederberg-Chemie GmbH**
**Postfach 11 63**
**D-4133 Neukirchen-Vluyn (DE)**

(72) Erfinder: **Schlütter, Aloys**
**Rheinstrasse 42**
**D-4152 Kempen 3 (DE)**

Courier Press, Leamington Spa, England.

EP 0 164 497 B1

**Beschreibung**

Die Erfindung betrifft eine Abdichtung aus verschweißbaren Abdichtungsbahnen aus Thermoplasten, insbesondere aus Mischungen von Olefin-Copolymerisaten und angesättigten Carbonsäureestern und/oder Bitumen und/oder Füllstoffen für Dächer, Tunnel und Wasserbauten, wobei im Überlappungsbereich der Abdichtung eine Doppelnaht vorgesehen ist.

Derartige Abdichtungen sind seit langem in der Anwendung. Der Rohstoff, aus dem die Bahnen hergestellt werden, hat beispielsweise eine Zusammensetzung aus 45—50 Gew-% eines Gemisches aus Polyäthylen-Acrylsäureester-Copolymerisat und einem kleinen Anteil etwa 10—15 Gew-% Hochdruckpolyäthylen und etwa 40 Gew.% Anthrazitstaub mit einer Körnung bis 30 µ und einem Anteil an unbrennbaren Bestandteilen von bis zu 30 Gew.%.

Zur verschweißung werden die Bahnen an den Nahtstellen übereinandergelegt und im Überlappungsbereich durch entsprechende Erwärmung an den Berührungsflächen plastifiziert. Dabei ist es bekannt, die überlappungsränder durch Doppelnähte miteinander zu verbinden. Solche Doppelnähte sind beispielsweise aus der FR-A-2 393 993 bekannt. Doppelnähte dienen vorzugsweise zur Herstellung prüffähiger Nähte. Durch Beaufschlagung des Hohlraumes zwischen beiden Nähten kann die Schweißverbindung auf ihre Dichtigkeit geprüft werden.

Die Materialdicke der Bahn und die Schweißnaht sind jeweils so ausgelegt, daß Spannungsrisse im Rahmen der als zulässig ausgewiesenen Belastung an sich nicht auftreten können. Gleichwohl zeigen sich in Einzelfällen bei zulässiger Belastung Risse.

Der Erfindung liegt die Aufgabe zugrunde, derartige Rißbildungen zu vermeiden. Dabei geht die Erfindung von dem Gedanken aus, daß die Bahnen einem natürlichen Schrumpf ausgesetzt sind, der in der Größenordnung zwischen 1 und 2 % liegt und sich insbesondere bei hohen Temperaturen ständig weiter fortsetzt. Dadurch entstehen Zugspannungen auch in Querrichtung zur Bahn auf die Schweißnähte. Die höchste Spannungskonzentration liegt dabei vor der Nahtkante. An dieser Stelle tritt einmal ein Zugkraft quer zur Nahtrichtung in der Unterbahn auf, bezüglich der Oberbahn bildet sich ein Kraftresultierende ebenfalls quer zur Nahtlinie, jedoch nicht in Bahnenebene, sondern vertikal zur Bahnenebene.

Dieses Spannungsverhältnis äußert sich auch dadurch, daß im Laufe einer längeren Liegedauer die Bahn im Bereich der Nahtkante leicht aus der Bahnenebene herausgehoben wird und hier eine Art Wulst in Nahtrichtung bildet. Da die Kräfte je nach Temperaturlage ungleichmäßig angreifen, entsteht schließlich in der Unterbahn unmittelbar vor der Nahtkante ein leichter Kerbriß, der sich im Laufe der Zeit weiter ausbreitet und schließlich zu einer Rißbildung führt. Häufig ist an dieser Stelle bei glasfaservlieskaschierten Bahnen das unterhalb der Bahn aufkaschierte Glasvlies ebenfalls beschädigt oder sogar gebrochen.

Nach der Erfindung wird diesem Schadensbild so entgegengewirkt, daß die auftretende Spannung abgeleitet wird und zwar so, daß sie die äußere Nahtkante unberührt läßt bzw. ein Aufwölben der Bahn an dieser Stelle ausgeschlossen wird.

Nach der Erfindung wird das oben beschriebene Schadensbild dadurch vermieden, daß von beiden, die Doppelnaht bildenden Nähten die Schweißnaht an dem zu verschweißenden Ende der Unterbahn mit der Oberbahn schwächer als die andere Schweißnaht ausgebildet ist. Nach der Erfindung wird demzufolge durch unterschiedliche Nahtbildung auftretenden Schrumpfspannungen entgegengewirkt. Die FR-A-2 393 993 zeigt lediglich Doppelnähte mit gleich ausgebildeten Schweißnähten.

Vorzugsweise ist die Breite der schwächeren Schweißnaht nach der Erfindung das 0,4 bis 0,6 fache der anderen Schweißnaht. Wahlweise kann der Zwischenraum zwischen beiden Schweißnähten auch für eine mechanische Befestigung genutzt werden. Dies ist insbesondere bei Herstellung von Dachabdichtungen der Fall. Bei lose verlegten Abdichtungen auf Dächern muß die Abdichtung gegen angreifende Windlasten gesichert werden. Die häufigst angewendete Sicherung wird durch Befestiger gebildet, die im überlappungsbereich durch die Unterbahn hindurch in die Dachtragekonstruktion greifen. Die Befestiger sind dann von der Oberbahn abgedeckt.

Bei verwendung mechanischer Befestiger zwischen beiden Schweißnähten ist zwischen der mechanischen Befestigung und jeder Schweißnaht ein Sicherheitsabstand vorgesehen.

Die Gesamtnahtbreite der erfindungsgemäßen Naht beträgt vorzugsweise zwischen 80 und 160 mm.

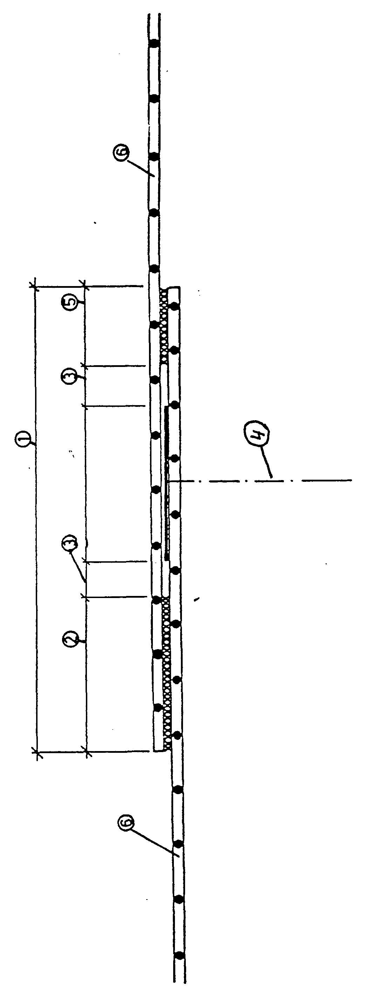

In der Zeichnung ist ein Ausführungsbeispiel der Erfindung dargestellt.

Zwei Abdichtungsbahnen 6 überlappen sich in einem Bereich 1, der eine Breite von 120 mm besitzt. An beiden Seiten des überlappungsbereiches 1 sind 2 Schweißnähte 2 und 5 vorgesehen, wobei die Schweißnaht 2 eine Breite von 40 mm und die Schweißnaht 5 eine Breite von 20 mm besitzt. Im Zwischenraum zwischen beiden Schweißnähten 2 und 5 ist eine mechanische Befestigung 4 vorgesehen. Die mechanische Befestigung durchgreift den im überlappungsbereich unten liegenden Bahnenrand und ist im Untergrund, z. B. einer Dachtragekonstruktion gehalten.

Beiderseits der mechanischen Befestigung 4 ist ein Abstand von 10 mm zur Schweißnaht vorgesehen.

**Patentansprüche**

1. Abdichtung bestehend aus verschweißbaren Abdichtungsbahnen aus Thermoplasten, insbesondere aus Mischungen von Olefin-Copolymerisaten und ungesättigten Carbonsäureestern und/ oder Bitumen und/oder Füllstoffen für Dächer, Tunnel und Wasserbauten, wobei im überlappungsbereich der Abdichtung eine Doppelnaht vorgesehen ist, dadurch gekennzeichnet, daß von beiden die Doppelnaht bildenden Nähten, die Schweißnaht an dem zu verschweißenden Ende der Unterbahn (6) mit der Oberbahn schwächer als die andere Schweißnaht ausgebildet ist.

2. Abdichtung nach Anspruch 1, dadurch gekennzeichnet, daß die Breite der schwächeren Schweißnaht (5) das 0,4 bis 0,6 fache der anderen Schweißnaht (2) ist.

3. Abdichtung nach Anspruch 1 bis 2, dadurch gekennzeichnet, daß zwischen beiden Schweißnähten eine mechanische Befestigung (4) vorgesehen ist.

4. Abdichtung nach Anspruch 3, dadurch gekennzeichnet, daß zwischen der mechanischen Befestigung (4) und jeder Schweißnaht (2, 5) ein Sicherheitsabstand besteht.

5. Abdichtung nach einem oder mehreren der Ansprüche 1 bis 5, dadurch gekennzeichnet daß die Gesamtnahtbreite der Doppelnaht 80—160 mm beträgt.

## Revendications

1. Produit d'étanchéité constitué de bandes d'étanchéité soudables en matériaux thermoplastiques, en particulier en mélanges de copolymérisats d'oléfines et d'esters carboniques insaturés et/ou de bitumes et/ou de charges pour des toitures, des tunnels et des travaux hydrauliques, dans lequel dans la zone en recouvrement de la bande d'étanchéité est prévu un double cordon de soudure, caractérisé par le fait que, parmi les deux cordons de soudure formant le double cordon de soudure, le cordon de soudure prévu à l'extrémité de la bande inférieure (6) à souder avec la bande supérieure est prévu plus faible que l'autre cordon de soudure.

2. Produit d'étanchéité selon la revendication 1, caractérisée par le fait que la largeur du cordon de soudure plus faible (5) vaut 0,4 à 0,6 fois celle de l'autre cordon de soudure (2).

3. Produit d'étanchéité selon les revendications 1 à 2, caractérisé par le fait qu'entre les deux cordons de soudure est prévue une fixation mécanique (4).

4. Produit d'étanchéité selon la revendication 3, caractérisé par le fait qu'entre la fixation mécanique (4) et chaque cordon de soudure (2, 5) existe un intervalle de sécurité.

5. Produit d'étanchéité selon une ou plusieurs des revendications 1 à 5, caractérisé par le fait que la largeur totale du double cordon de soudure atteint 80—160 mm.

## Claims

1. Seal consisting of weldable sealing strips of thermoplastics, especially of mixtures of olefin copolymers and unsaturated carboxylic acid esters and/or bitumen and/or fillers, for roofs, tunnels and structures in water, wherein a double seam is provided in the overlap zone of the seal, characterized in that, of two seams forming the double seam, the weld seam at the edge of the lower strip (6) to be welded with the upper strip is made weaker than the other weld seam.

2. Seal according to Claim 1, characterized in that the width of the weaker weld seam (5) is 0.4 to 0.6 times that of the other weld seam (2).

3. Seal according to Claims 1 to 2, characterized in that a mechanical fixing (4) is provided between the two weld seams.

4. Seal according to Claim 3, characterized in that a safety distance exists between the mechanical fixing (4) and each weld seam (2, 5).

5. Seal according to one or more of Claims 1 to 5, characterized in that the total width of the double seam is 80 to 160 mm.